# EUROPEAN PATENT APPLICATION

(11) **EP 3 852 169 A1**
(43) Date of publication of application: **21.07.2021**
(21) Application number: 19898025.2
(22) Date of filing: 28.10.2019
(51) Int. Cl.: H01M 4/131, H01M 4/525, H01M 4/64, H01M 4/66, H01M 10/052, H01M 10/0566, H01M 10/0585, H01M 2/10, H01M 2/16

(54) **LITHIUM SECONDARY BATTERY**

(30) Priority: 18.12.2018 JP 2018236550
(71) Applicant: NGK Insulators, Ltd., Nagoya-shi, Aichi 467-8530 (JP)
(72) Inventor: SUZUKI, Chiori, Nagoya-shi, Aichi 467-8530 (JP); OTSUKA, Haruo, Nagoya-shi, Aichi 467-8530 (JP)
(74) Representative: Müller-Boré & Partner Patentanwälte PartG mbB
(86) International application number: PCT/JP2019/042149
(87) International publication number: WO 2020/129411

(57) **Abstract**

A thin lithium secondary cell (1) includes a positive electrode (2), a separator (4), a negative electrode (3), an electrolytic solution (5), and a cell case (6). The separator (4) is arranged on the positive electrode (2) in a predetermined direction of superposition. The separator (4) includes a resin layer. The negative electrode (3) is arranged on the separator (4) on the side opposite to the positive electrode (2) in the direction of superposition. The positive electrode (2), the negative electrode (3), and the separator (4) are impregnated with the electrolytic solution (5). The cell case (6) has a sheet-like shape and covers the positive electrode (2) and the negative electrode (3) from both sides in the direction of superposition. The cell case (6) houses therein the positive electrode (2), the separator (4), the negative electrode (3), and the electrolytic solution (5). The separator (4) has air permeability higher than or equal to 20 sec/100cc and lower than or equal to 80 sec/100cc. This configuration allows the lithium secondary cell (1) to achieve both an improvement in cell characteristics and a reduction in the occurrence of a short circuit caused by lithium dendrites.

## Description

### Technical Field

The present invention relates to a thin lithium secondary cell.

### Background Art

Lithium secondary cells (also called lithium-ion secondary cells) have conventionally used a microporous membrane made of polyolefin as a separator arranged between a positive electrode and a negative electrode. International Publication No. WO/2016/121630 (Document 1) proposes a multilayer heat-resistant separator element in which an organic heat-resistant layer is laminated on a microporous membrane made of polyethylene or polypropylene in order to reduce the occurrence of warpage or curling in the separator. International Publication No. WO/2013/183666 (Document 2) proposes a resin porous film made of polyethylene or polypropylene and having a 1% modulus of 4.5 MPa or higher at 90°C in the machine direction in order to reduce the occurrence of wrinkles in the separator during transport in a high-temperature environment. This resin porous film has air permeability lower than or equal to 800 sec/100 ml in an environment at 20°C.

Consideration is being given to using lithium secondary cells as power supply sources for smart cards. As one example of the method of manufacturing such smart cards, hot lamination is known in which heat and pressure are applied to a lithium secondary cell sandwiched between card base materials.

In the case where a lithium secondary cell including the separator element according to Document 1 is used for a smart card, the air permeability of the separator may increase as a result of the polyethylene or polypropylene microporous membrane being melted during hot lamination and thereby blocking the pores of the separator. An increase in the air permeability of the separator may inhibit the passage of the electrolytic solution and lithium ions through the separator and may consequently deteriorate cell characteristics. The same applies to the film according to Document 2. On the other hand, an excessive decrease in the air permeability of the separator in a lithium secondary cell may develop a short circuit between the positive electrode and the negative electrode caused by lithium dendrites.

### Summary of Invention

The present invention is intended for a thin lithium secondary cell, and it is an object of the present invention to achieve both an improvement in cell characteristics and a reduction in the occurrence of a short circuit caused by lithium dendrites.

A lithium secondary cell a according to a preferable embodiment of the present invention includes a positive electrode, a separator including a resin layer and arranged on the positive electrode in a predetermined direction of superposition, a negative electrode arranged on the separator on a side opposite to the positive electrode in the direction of superposition, an electrolytic solution with which the positive electrode, the negative electrode, and the separator are impregnated, and a sheet-like cell case covering the positive electrode and the negative electrode from both sides in the direction of superposition and housing therein the positive electrode, the separator, the negative electrode, and the electrolytic solution. The separator has air permeability higher than or equal to 20 sec/100cc and lower than or equal to 80 sec/100cc. This configuration allows the lithium secondary cell to achieve both an improvement in cell characteristics and a reduction in the occurrence of a short circuit caused by lithium dendrites.

Preferably, the resin layer is formed of polyimide.

Preferably, out of the positive electrode and the negative electrode, one electrode that faces the resin layer has a surface facing the resin layer and not containing resin.

Preferably, the one electrode is the positive electrode. The positive electrode includes a sheet-like current collector having conductivity, and an active material plate that is a plate-like ceramic sintered body containing a lithium composite oxide.

Preferably, the separator has a surface formed of resin and facing the other electrode out of the positive electrode and the negative electrode, and the other electrode has a surface facing the separator and not containing resin.

Preferably, the one electrode is the positive electrode, and the other electrode is the negative electrode. The positive electrode includes a sheet-like current collector having conductivity, and an active material plate that is a plate-like ceramic sintered body containing a lithium composite oxide. The negative electrode includes a sheet-like current collector having conductivity, and an active material plate that is a plate-like ceramic sintered body containing a lithium composite oxide.

Preferably, the active material plate of the positive electrode has a structure in which primary particles having a layered rock-salt structure are coupled together. The primary particles have an average inclination angle greater than 0° and less than or equal to 30°. The average inclination angle is an average value of angles formed by (003) planes of the primary particles and a main surface of the active material plate of the positive electrode.

Preferably, the lithium secondary cell described above is used as a power supply source for a sheet-like device or a device having flexibility.

Preferably, the lithium secondary cell described above is used as power supply source for a smart card that is the device having flexibility.

Preferably, the lithium secondary cell described above is used as a power supply source for a target device that undergoes a process of applying pressure while applying heat during manufacture.

These and other objects, features, aspects and advantages of the present invention will become more apparent from the following detailed description of the present invention when taken in conjunction with the accompanying drawings.

### Brief Description of Drawings

Fig. 1 is a sectional view of a lithium secondary cell according to one embodiment;
Fig. 2 is a plan view of the lithium secondary cell;
Fig. 3 is a sectional view of another lithium secondary cell;
Fig. 4A is a diagram illustrating a procedure for manufacturing the lithium secondary cell; and
Fig. 4B is a diagram illustrating the procedure for manufacturing the lithium secondary cell.

### Description of Embodiments

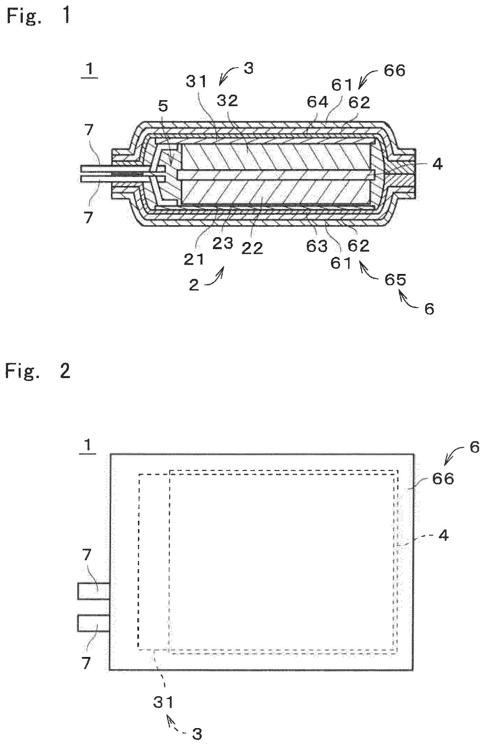

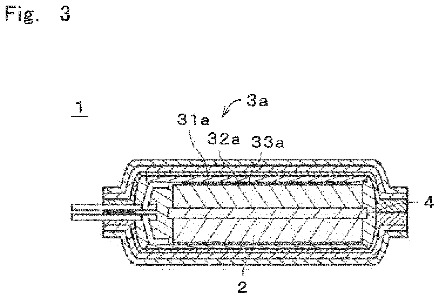

Fig. 1 is a sectional view illustrating a configuration of a lithium secondary cell 1 according to one embodiment of the present invention. Fig. 2 is a plan view of the lithium secondary cell 1. To facilitate understanding of the drawing, the lithium secondary cell 1 and its configuration are illustrated thicker in Fig. 1 than actual thicknesses. In Fig. 1, the widths of a positive electrode 2, a separator 4, and a negative electrode 3, which will be described later, in the right-left direction are also illustrated smaller than actual widths, and the width of a cell case 6 at the junctions in the right-left direction (i.e., both ends in the right-left direction in Fig. 1) is also illustrated greater than an actual width. Note that part of the structure on the front and back of the section is also illustrated in Fig. 1. The same applies to Fig. 3.

The lithium secondary cell 1 is a compact and thin cell. The lithium secondary cell 1 has, for example, a generally rectangular shape in plan view. In plan view, for example, the lithium secondary cell 1 has a longitudinal length of 10 mm to 46 mm and a lateral length of 10 mm to 46 mm. The lithium secondary cell 1 has a thickness (i.e., a thickness in the up-down direction in Fig. 1) of, for example, 0.30 mm to 0.45 mm and preferably 0.40 mm to 0.45 mm. The lithium secondary cell 1 is a sheet-like member or a thin plate-like member having flexibility. The sheet-like member as used herein refers to a thin member that becomes easily deformed by a relatively small force, and is also referred to as a film-like member. The same applies to the following description.

For example, the lithium secondary cell 1 is mounted on a sheet-like device or a device having flexibility and is used as a power supply source. The sheet-like device as used herein refers to a thin device that becomes easily deformed by a relatively small force, and is also referred to as a film-like device. In the present embodiment, the lithium secondary cell 1 is built in, for example, a smart card having an arithmetic processing function and used as a power supply source for the smart card. The smart card is a card-type device having flexibility. For example, the smart card is used as a card with a fingerprint recognition function and a wireless communication function, the card including a wireless communication IC, an ASIC for fingerprint analysis, and a fingerprint sensor. In the following description, devices such as smart cards, for which the lithium secondary cell 1 is used as a power supply source, are also referred to as "target devices."

The lithium secondary cell 1 is mounted on a smart card, for example, by cold lamination in which pressure is applied at ordinary temperatures or by hot lamination in which pressure is applied with the application of heat. The processing temperature in hot lamination is, for example, in the range of 110°C to 260°C. An upper limit of the processing temperature is preferably lower than 240°C, more preferably lower than 220°C, yet more preferably lower than 200°C, and most preferably lower than or equal to 150°C. In the hot lamination, the processing pressure is in the range of, for example, 0.1 mega-pascal (MPa) to 6 MPa, and the processing time (i.e., the heating and pressing time) is in the range of, for example, 10 to 20 minutes.

The lithium secondary cell 1 includes the positive electrode 2, the negative electrode 3, the separator 4, an electrolytic solution 5, the cell case 6, and two terminals 7. The positive electrode 2, the separator 4, and the negative electrode 3 are superposed in a predetermined direction of superposition. In the example illustrated in Fig. 1, the positive electrode 2, the separator 4, and the negative electrode 3 are laminated in the up-down direction in the drawing. In the following description, the "upper and lower sides in Fig. 1" are simply referred to as the "upper and lower sides." The "up-down direction in Fig. 1" is simply referred to as the "up-down direction" or the "direction of superposition." The up-down direction in Fig. 1 does not necessarily have to match an actual up-down direction when the lithium secondary cell 1 is mounted on a target device such as a smart card.

In the example illustrated in Fig. 1, the separator 4 is arranged on the upper face of the positive electrode 2 in the up-down direction (i.e., the direction of superposition). the negative electrode 3 is arranged on the upper face of the separator 4 in the up-down direction. In other words, the negative electrode 3 is arranged on the separator 4 on the side opposite to the positive electrode 2 in the up-down direction. The positive electrode 2, the separator 4, and the negative electrode 3 each have, for example, a generally rectangular shape in plan view. The positive electrode 2, the separator 4, and the negative electrode 3 have almost the same shape (i.e., almost the same form and the same dimensions) in plan view.

The cell case 6 is a sheet-like and bag-shaped member. The cell case 6 has a generally rectangular shape in plan view. The cell case 6 includes two-layer sheet portions 65 and 66 superposed in the up-down direction. In the following description, the sheet portion 65 located on the lower side of the positive electrode 2 is referred to as a "first sheet portion 65," and the sheet portion 66 located on the upper side of the negative electrode 3 is referred to as a "second sheet portion 66." The outer peripheral edge of the first sheet portion 65 and the outer peripheral edge of the second sheet portion 66 are bonded together by, for example, so-called heat seal. For example, the first sheet portion 65 and the second sheet portion 66 of the cell case 6 are each formed of a laminate film in which metal foil 61 formed of a metal such as aluminum (Al) and an insulating resin layer 62 are laminated on each other. In the first sheet portion 65 and the second sheet portion 66, the resin layer 62 is located on the inner side of the metal foil 61.

The cell case 6 covers the positive electrode 2 and the negative electrode 3 from both sides in the up-down direction. The cell case 6 houses therein the positive electrode 2, the separator 4, the negative electrode 3, and the electrolytic solution 5. The electrolytic solution 5 is continuously present around the positive electrode 2, the separator 4, and the negative electrode 3. In other words, the electrolytic solution 5 is present between the positive electrode 2 and the negative electrode 3. The positive electrode 2, the separator 4, and the negative electrode 3 are impregnated with the electrolytic solution 5. The two terminals 7 extend outward from the inside of the cell case 6. Inside the cell case 6, one of the terminals 7 is electrically connected to the positive electrode 2, and the other terminal 7 is electrically connected to the negative electrode 3.

The positive electrode 2 includes a positive current collector 21, a positive active material plate 22, and a conductive bonding layer 23. The positive current collector 21 is a sheet-like member having conductivity. The lower face of the positive current collector 21 is bonded to the resin layer 62 of the cell case 6 via a positive bonding layer 63. The positive bonding layer 63 is formed of, for example, a mixture of resins including an acid-modified polyolefin resin and an epoxy resin. The positive bonding layer 63 may be formed by any of other various materials. The positive bonding layer 63 has a thickness of, for example, 0.5 µm to 10 µm.

For example, the positive current collector 21 includes metal foil formed of a metal such as aluminum and a conductive carbon layer laminated on the upper face of the metal foil. In other words, the main surface of the positive current collector 21 that faces the positive active material plate 22 is covered with the conductive carbon layer. The aforementioned metal foil may be formed of any of various metals other than aluminum (e.g., copper, nickel, silver, gold, chromium, iron, tin, lead, tungsten, molybdenum, titanium, zinc, or an alloy containing any of these metals). Note that the aforementioned conductive carbon layer may be omitted from the positive current collector 21.

The positive active material plate 22 (i.e., the active material plate of the positive electrode 2) is a relatively thin plate-like ceramic sintered body containing a lithium composite oxide. The positive active material plate 22 is bonded to the upper face of the positive current collector 21 via the conductive bonding layer 23. The positive active material plate 22 faces the separator 4 in the up-down direction. The upper face of the positive active material plate 22 is in contact with the lower face of the separator 4. The positive active material plate 22 substantially does not contain resins. Thus, the main surface of the positive electrode 2 that faces the separator 4 (i.e., the upper face in Fig. 1) substantially does not contain resins.

The positive active material plate 22 has a structure in which (many) primary particles are coupled together. The primary particles are composed of a lithium composite oxide having a layered rock-salt structure. The lithium composite oxide is typically an oxide expressed by the general formula: LiₚMO₂ (where 0.05 < p < 1.10). Here, M is at least one kind of transition metal and contains one or more kinds selected from the group consisting of cobalt (Co), nickel (Ni), and manganese (Mn). The layered rock-salt structure as used herein refers to a crystal structure in which a lithium layer and a transition metal layer other than lithium are alternately laminated one above another with an oxygen layer sandwiched therebetween. That is, the layered rock-salt structure is a crystal structure in which a transition metal ion layer and a sole lithium layer are alternately laminated via oxide ions (typically, α-NaFeO2-type structure in which a transition metal and lithium are regularly arranged in the [111] axial direction of a cubic crystal rock-salt structure).

Preferable examples of the lithium composite oxide having a layered rock-salt structure include lithium cobalt oxides (LiₚCoO₂, where 1 ≤ p ≤ 1.1), lithium nickel oxides (LiNiO₂), lithium manganese oxides (Li₂MnO₃), nickel lithium manganese oxides (Liₚ(Ni_{0.5}, Mn_{0.5})O₂), solid solutions expressed by the general formula: Liₚ(Coₓ, Ni_{y}, Mn_{z})O₂ (where 0.97 ≤ p ≤ 1.07 and x + y + z = 1), solid solutions expressed by Liₚ(Coₓ, Ni_{y}, Al_{z})O₂ (where 0.97 ≤ p ≤ 1.07, x + y + z = 1,0 < x ≤ 0.25, 0.6 ≤ y ≤ 0.9, and 0 < z ≤ 0.1), and solid solutions of Li₂MnO₃ and LiMO₂ (where M is a transition metal such as Co or Ni). In particular, the lithium composite oxide is preferably a lithium cobalt oxide LiₚCoO₂ (where 1 ≤ p ≤ 1.1) and, for example, LiCoO₂ (LCO).

The positive active material plate 22 may further contain one or more kinds of elements such as magnesium (Mg), aluminum, silicon (Si), calcium (Ca), titanium (Ti), vanadium (V), chromium (Cr), iron (Fe), copper (Cu), zinc (Zn), gallium (Ga), germanium (Ge), strontium (Sr), yttrium (Y), zirconia (Zr), niobium (Nb), molybdenum (Mo), silver (Ag), tin (Sn), antimony (Sb), tellurium (Te), barium (Ba), and bismuth (Bi). Alternatively, the positive active material plate 22 may be subjected to sputtering using gold (Au) or the like as a current-collecting assistant.

In the positive active material plate 22, a mean particle diameter of the aforementioned primary particles, i.e., a primary particle diameter, is, for example, less than or equal to 20 µm and preferably less than or equal to 15 µm. The primary particle diameter is also, for example, greater than or equal to 0.2 µm and preferably greater than or equal to 0.4 µm. The primary particle diameter can be measured by analyzing a scanning electron microscope (SEM) image of a section of the positive active material plate 22. Specifically, for example, the positive active material plate 22 is processed by a cross-section polisher (CP) to expose a grinded section, and this grinded section is observed with an SEM at a predetermined magnification (e.g., 1000x magnification) with a predetermined field of view (e.g., 125 µm × 125 µm). At this time, the field of view is set such that 20 or more primary particles are included in the field of view. Then, for every primary particle in a resultant SEM image, the diameter of a circumscribed circle drawn from the primary particle is obtained, and an average value of the obtained diameters is assumed to be the primary particle diameter.

In the positive active material plate 22, the primary particles preferably have an average inclination angle (i.e., an average orientation angle) greater than 0° and less than or equal to 30°. The average inclination angle is also more preferably greater than or equal to 5° and less than or equal to 28°, and more preferably greater than or equal to 10° and less than or equal to 25°. The average inclination angle is an average value of angles formed by the (003) planes of the primary particles and the main surface of the positive active material plate 22 (e.g., the lower face of the positive active material plate 22).

The inclination angles of the primary particles (i.e., the angles formed by the (003) planes of the primary particles and the main surface of the positive active material plate 22) can be measured by analyzing a section of the positive active material plate 22 by electron backscatter diffraction (EBSD). Specifically, for example, the positive active material plate 22 is processed by a cross-section polisher to expose a grinded section, and this grinded section is analyzed by EBSD at a predetermined magnification (e.g., 1000x magnification) with a predetermined field of view (e.g., 125 µm × 125 µm). In a resultant EBSD image, the inclination angle of each primary particle is expressed by the shades of colors, i.e., a darker color indicates a smaller inclination angle. Then, an average value of the inclination angles of the primary particles obtained from the EBSD image is assumed to be the aforementioned average inclination angle.

Among the primary particles constituting the positive active material plate 22, the proportion of primary particles having inclination angles greater than or equal to 0° and less than or equal to 30° is preferably 60% or higher, more preferably 80% or higher, and yet more preferably 90% or higher. There are no particular limitations on an upper limit of this proportion, and the proportion may be 100%. In the aforementioned EBSD image, this proportion can be obtained by obtaining a total area of the primary particles having inclination angles greater than or equal to 0° and less than or equal to 30° and dividing this total area of the primary particles by a total area of all the primary particles.

The positive active material plate 22 has a porosity of, for example, 25% to 45%. The porosity of the positive active material plate 22 as used herein refers to a volume ratio of pores (including open pores and closed pores) of the positive active material plate 22. This porosity can be measured by analyzing an SEM image of a section of the positive active material plate 22. For example, the positive active material plate 22 is processed by a cross-section polisher (CP) to expose a grinded section. This grinded section is observed with an SEM at a predetermined magnification (e.g., 1000x magnification) with a predetermined field of view (e.g., 125 µm × 125 µm). A resultant SEM image is analyzed to obtain the porosity (%) by dividing a total area of all the pores in the field of view by the area (cross-sectional area) of the positive active material plate 22 in the field of view and multiplying the obtained value by 100.

An average value of the diameters of the pores included in the positive active material plate 22, i.e., a mean pore diameter, is, for example, less than or equal to 15 µm, preferably less than or equal to 12 µm, and more preferably less than or equal to 10 µm. The mean pore diameter is also, for example, greater than or equal to 0.1 µm and preferably greater than or equal to 0.3 µm. The aforementioned diameters of the pores are typically the diameters of spheres when the pores are assumed to be the spheres having the same volume or the same cross-sectional area. The mean pore diameter is obtained by calculating an average value of the diameters of pores on the basis of the number of pores. The mean pore diameter can be obtained by, for example, analysis of a sectional SEM image or a known method such as mercury porosimetry. Preferably, the mean pore diameter is measured by mercury porosimetry using a mercury porosimeter.

In the example illustrated in Fig. 1, the positive active material plate 22 is a single plate-like member, but may be divided into a plurality of plate-like members (hereinafter, referred to as "active material plate elements"). In this case, each of the active material plate elements is bonded to the positive current collector 21 via the conductive bonding layer 23. For example, the active material plate elements are arranged in a matrix (i.e., in grid form) on the positive current collector 21. Each active material plate element has, for example, a generally rectangular shape in plan view. In plan view, the active material plate elements may have almost the same shape (i.e., almost the same form and almost the same dimensions) or may have different shapes. The active material plate elements are arranged spaced from each other in plan view.

The conductive bonding layer 23 includes conductive powder and a binder. Examples of the conductive powder include acetylene black, scaly natural graphite, carbon nanotubes, carbon nanofibers, carbon nanotube derivatives, and carbon nanofiber derivatives. The binder contains, for example, polyimide-amide resins. The polyimide-amide resins contained in the binder may be of one kind, or may be of two or more kinds. The binder may contain resins other than polyimide-amide resins. The conductive bonding layer 23 is formed by applying the conductive powder and the binder described above as well as a liquid or paste adhesive containing a solvent to the positive current collector 21 or the positive active material plate 22 and causing the solvent to evaporate and solidify between the positive electrode collector 21 and the positive active material plate 22.

The positive current collector 21 has a thickness of, for example, 9 µm to 50 µm, preferably 9 µm to 20 µm, and more preferably 9 µm to 15 µm. The positive active material plate 22 has a thickness of, for example, 15 µm to 200 µm, preferably 30 µm to 150 µm, and more preferably 50 µm to 100 µm. By increasing the thickness of the positive active material plate 22, it is possible to increase the capacity of the active material per unit area and to increase the energy density of the lithium secondary cell 1. By reducing the thickness of the positive active material plate 22, it is possible to suppress deterioration of cell characteristics (in particular, an increase in resistance value) accompanying the repetition of charging and discharging. The conductive bonding layer 23 has a thickness of, for example, 3 µm to 28 µm and preferably 5 µm to 25 µm.

The negative electrode 3 includes a negative current collector 31 and a negative active material layer 32. The negative current collector 31 is a sheet-like member having conductivity. The upper face of the negative current collector 31 is bonded to the cell case 6 via a negative bonding layer 64. For example, the negative bonding layer 64 is formed of a mixture of resins including an acid-modified polyolefin resin and an epoxy resins. The negative bonding layer 64 may be formed of any of other various materials. The negative bonding layer 64 has a thickness of, for example, 0.5 µm to 10 µm.

For example, the negative current collector 31 is metal foil formed of a metal such as copper. The metal foil may be formed of any of various metals other than copper (e.g., copper, stainless steel, nickel, aluminum, silver, gold, chromium, iron, tin, lead, tungsten, molybdenum, titanium, zinc, or an alloy containing any of these metals).

The negative active material layer 32 includes a binder composed primarily of resin and a carbonaceous material serving as a negative active material. The negative active material layer 32 is applied as a coat on the lower face of the negative current collector 31. That is, the negative electrode 3 is a so-called coating electrode. The negative active material layer 32 faces the separator 4 in the up-down direction. The lower face of the negative active material layer 32 is in contact with the upper face of the separator 4. Examples of the aforementioned carbonaceous material of the negative active material layer 32 include graphite (natural graphite or artificial graphite), pyrolytic carbon, coke, resin fired bodies, mesophase microspheres, and mesosphere pitches. The negative electrode 3 may use a lithium-occluding substance as the negative active material, instead of the carbonaceous material. Examples of the lithium-occluding substance include silicon, aluminum, tin, iron, iridium, an alloy containing any of the aforementioned materials, an oxide containing any of the aforementioned materials, and a fluoride containing any of the aforementioned materials.

The binder may be made of, for example, styrene-butadiene rubber (SBR), polyvinylidene fluoride (PVDF), or a mixture of these materials. In the present embodiment, SBR is used as the binder. SBR is less likely to dissolve in γ-butyrolactone (GBL) contained in the electrolytic solution 5, which will be described later, than PVDF. Thus, using SBR as the binder of the negative electrode 3 suppresses deterioration of the negative active material layer 32 caused by the electrolytic solution 5.

The negative current collector 31 has a thickness of, for example, 5 µm to 25 µm, preferably 8 µm to 20 µm, and more preferably 8 µm to 15 µm. The negative active material layer 32 has a thickness of, for example, 20 µm to 300 µm, preferably 30 µm to 250 µm, and more preferably 30 µm to 150 µm. By increasing the thickness of the negative active material layer 32, it is possible to increase the capacity of the active material per unit area and to increase the energy density of the lithium secondary cell 1. By reducing the thickness of the negative active material layer 32, it is possible to suppress deterioration of cell characteristics (in particular, an increase in resistance value) accompanying the repetition of charging and discharging.

The lithium secondary cell 1 may include a negative electrode 3a having a structure different from the structure of the negative electrode 3 as illustrated in Fig. 3, instead of the negative electrode 3 serving as a coating electrode. The negative electrode 3a has almost the same structure as the aforementioned positive electrode 2. Specifically, the negative electrode 3a includes a negative current collector 31a, a negative active material plate 32a, and a conductive bonding layer 33a. The negative current collector 31a is a sheet-like member having conductivity. For example, the negative current collector 31a is a member formed of a similar material to that of the aforementioned negative current collector 31 and having the same structure as the negative current collector 31.

The negative active material plate 32a (i.e., the active material plate of the negative electrode 3a) is a relatively thin plate-like ceramic sintered body that contains a lithium composite oxide (e.g., lithium titanium oxide (LTO)). The negative active material plate 32a is bonded to the lower face of the negative current collector 31a via the conductive bonding layer 33a. For example, the conductive bonding layer 33a is formed of a similar material to that of the aforementioned conductive bonding layer 23 of the positive electrode 2. The negative active material plate 32a faces the separator 4 in the up-down direction. The lower face of the negative active material plate 32a is in contact with the upper face of the separator 4. Like the positive active material plate 22, the negative active material plate 32a substantially does not contain resins. Thus, the main surface of the negative electrode 3a that faces the separator 4 (i.e., the lower face in Fig. 3) substantially does not contain resins.

The negative current collector 31 has a thickness of, for example, 5 µm to 25 µm, preferably 8 µm to 20 µm, and more preferably 8 µm to 15 µm. The negative active material plate 32a has a thickness of, for example, 10 µm to 300 µm, preferably 30 µm to 200 µm, and more preferably 30 µm to 150 µm. By increasing the thickness of the negative active material plate 32a, it is possible to increase the capacity of the active material per unit area and to increase the energy density of the lithium secondary cell 1. By reducing the thickness of the negative active material plate 32a, it is possible to suppress deterioration of cell characteristics (in particular, an increase in resistance value) accompanying the repetition of charging and discharging. The conductive bonding layer 33a has a thickness of, for example, 3 µm to 30 µm and preferably 5 µm to 25 µm.

In the example illustrated in Fig. 3, the negative active material plate 32a is a single plate-like member, but may be divided into a plurality of plate-like members (hereinafter, referred to as "active material plate elements"). In this case, each of the active material plate elements is bonded to the negative current collector 31a via the conductive bonding layer 33a. For example, the active material plate elements are arranged in a matrix (i.e., in grid form) on the negative current collector 31a. Each active material plate element has, for example, a generally rectangular shape in plan view. In plan view, the active material plate elements may have almost the same shape (i.e., almost the same form and almost the same dimensions) or may have different shapes. The active material plate elements are arranged spaced from one another in plan view.

In the lithium secondary cell 1 illustrated in Figs. 1 and 3, the electrolytic solution 5 is, for example, a solution obtained by dissolving lithium borofluoride (LiBF₄) in a nonaqueous solvent. The nonaqueous solvent may be a sole solvent of γ-butyrolactone (GBL), or may be a mixed solvent containing GBL and ethylene carbonate (EC). The nonaqueous solvent containing GBL increases the boiling point of the electrolytic solution 5 and accordingly improves the heat resistance of the lithium secondary cell 1. From the viewpoint of improving the heat resistance of the lithium secondary cell 1, the volume ratio of EC and GBL in the nonaqueous solvent is, for example, in the range of 0:1 to 1:1 (i.e., the GBL ratio is in the range of 50% to 100% by volume), preferably in the range of 0:1 to 1:1.5 (i.e., the GBL ratio is in the range of 60% to 100% by volume), more preferably in the range of 0:1 to 1:2 (i.e., the GBL ratio is in the range of 66.6% to 100% by volume), and yet more preferably in the range of 0:1 to 1:3 (i.e., the GBL ratio is in the range of 75% to 100% by volume). The solvent of the electrolytic solution 5 may be changed in various ways. For example, the solvent of the electrolytic solution 5 does not necessarily have to contain GBL and may be a sole solvent of EC.

Lithium borofluoride (LiBF₄) serving as a solute is an electrolyte having a high decomposition temperature. This further improves the heat resistance of the lithium secondary cell 1. The concentration of LiBF₄ in the electrolytic solution 5 is, for example, in the range of 0.5 mol/L to 2 mol/L, preferably in the range of 0.6 mol/L to 1.9 mol/L, more preferably in the range of 0.7 mol/L to 1.7 mol/L, and yet more preferably in the range of 0.8 mol/L to 1.5 mol/L. Note that the solute of the electrolytic solution 5 may be changed in various ways. For example, the solute of the electrolytic solution 5 may be lithium phosphate hexafluoride (LiPF₆).

Preferably, the electrolytic solution 5 further contains vinylene carbonate (VC) and/or fluoroethylene carbonate (FEC) as an additive. Both VC and FEC are excellent in heat resistance. The electrolytic solution 5 containing such an additive forms an SEI film excellent in heat resistance on the surface of the negative electrode 3 and further improves the heat resistance of the lithium secondary cell 1.

The separator 4 is a sheet-like member or a thin plate-like insulating member. For example, the separator 4 is a single-layer separator formed of resin. In other words, the surfaces of the separator 4 that face the positive electrode 2 and the negative electrode 3 are formed of resin. Examples of the resin include polyimide and polyester (e.g., polyethylene terephthalate (PET)). In the present embodiment, the separator 4 is a porous film made of polyimide (e.g., three-dimensional porous structure (3DOM)). Polyimide is more excellent in heat resistance than polyethylene and polypropylene and is also more excellent in wettability with the aforementioned GBL. Thus, using the polyimide separator 4 improves the heat resistance of the lithium secondary cell 1. Polyimide also prevents the electrolytic solution 5 from being rejected by the separator 4 and allows the electrolytic solution 5 to easily permeate through the separator 4.

For example, the separator 4 has a thickness greater than or equal to 15 µm, preferably greater than or equal to 18 µm, and more preferably greater than or equal to 20 µm. The thickness of the separator 4 is also, for example, less than or equal to 31 µm, preferably less than or equal to 28 µm, and more preferably less than or equal to 26 µm. By increasing the thickness of the separator 4, it is possible to suppress the occurrence of a short circuit between the positive electrode 2 and the negative electrode 3 caused by lithium dendrites even in the case where lithium dendrites (dendritic crystals of lithium) are precipitated. By reducing the thickness of the separator 4, it is possible to facilitate the passage of the electrolytic solution 5 and lithium ions through the separator 4 and to reduce the internal resistance of the lithium secondary cell 1.

For example, the separator 4 has air permeability higher than or equal to 20 sec/100cc (second per 100 cc), preferably higher than or equal to 30 sec/100cc, and more preferably higher than or equal to 40 sec/100cc. The air permeability of the separator 4 is also, for example, lower than or equal to 80 sec/100cc, preferably lower than or equal to 75 sec/100cc, and more preferably lower than or equal to 70 sec/100cc. This air permeability is the air permeability of the separator 4 during use of the lithium secondary cell 1 (e.g., the separator 4 incorporated in the lithium secondary cell 1 built in a smart card), and is not the air permeability of the separator 4 before incorporated into the lithium secondary cell 1. The same applies to the following description.

By lowering the air permeability of the separator 4, it is possible to facilitate the passage of the electrolytic solution 5 and lithium ions through the separator 4 and to reduce the internal resistance of the lithium secondary cell 1. By raising the air permeability of the separator 4, it is possible to suppress the precipitation of lithium dendrites and to suppress the occurrence of a short circuit between the positive electrode 2 and the negative electrode 3 caused by lithium dendrites. By raising the air permeability of the separator 4, it is also possible to improve a shutdown function under abnormal conditions such as overcharging and to improve the safety of the lithium secondary cell 1.

The air permeability of the separator 4 can be measured using a perm porometer (device for measuring the distribution of micropore diameters). Specifically, the lithium secondary cell 1 is taken out of the target device such as a smart card, and the separator 4 is taken out by decomposing the lithium secondary cell 1 in order to measure the air permeability of the separator 4 with the perm porometer. Alternatively, the lithium secondary cell 1 before incorporated into the target device may be subjected to processing such as pressurization under almost the same conditions as those during manufacture of the target device, and thereafter the separator 4 may be taken out by decomposing the lithium secondary cell 1 in order to measure the air permeability of the separator 4 with the perm porometer. For example, the lithium secondary cell 1 may be processed using almost the same processing temperature and almost the same processing pressure for almost the same processing time as those during hot lamination of the smart card, and then the separator 4 may be taken out of the lithium secondary cell 1 in order to measure the air permeability of the separator 4 with the perm porometer.

Note that the separator 4 only needs to include a resin layer formed of resin such as polyimide, and for example, may be a two-layer separator in which a resin layer is laminated on a ceramic substrate. Alternatively, the separator 4 may be a two-layer separator in which a resin layer serving as a substrate is coated with ceramic. The separator 4 may have a multilayer structure including three or more layers. For example, the separator 4 may be a three-layer separator in which a resin layer is formed on each of the upper and lower surfaces of a ceramic substrate. In the case where the separator 4 has a laminated structure including two or more layers, the air permeability of the separator 4 corresponds not to the air permeability of part of the layers included in the separator 4, but to the air permeability of the separator 4 as a whole.

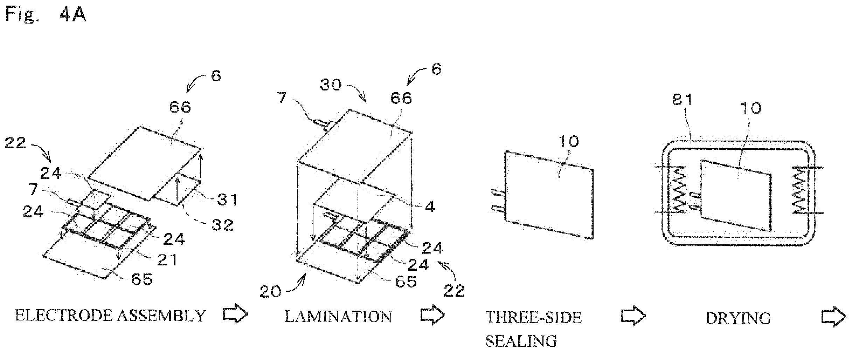

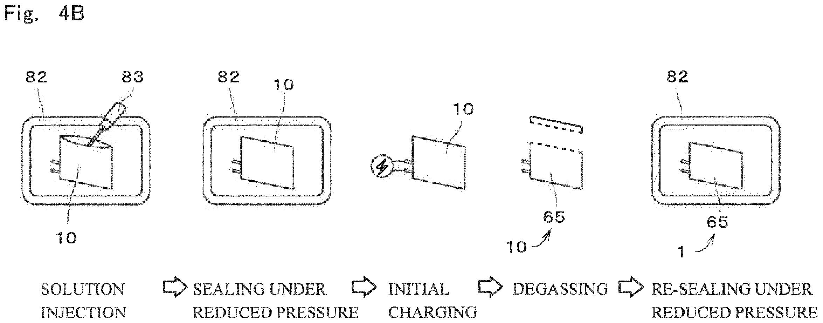

Next, one example of a procedure for manufacturing the lithium secondary cell 1 will be described with reference to Figs. 4A and 4B. First, two aluminum laminate films (a three-layer structure including a polypropylene film, aluminum foil, and a nylon film and having a thickness of 61 µm, produced by SHOWA DENKO PACKAGING K.K.) are prepared as the first sheet portion 65 and the second sheet portion 66 of the cell case 6. The positive active material plate 22 is also prepared. The positive active material plate 22 is formed by sintering an LiCoO₂ green sheet. In the example illustrated in Fig. 4A, the positive active material plate 22 including a plurality of active material plate elements 24 is used. The positive active material plate 22 in the example illustrated in Fig. 4A includes a plurality of active material plate elements 24. Note that the manufacturing method described below remains almost unchanged when the positive active material plate 22 is an integral member (i.e., a single plate).

The LiCoO₂ green sheet is prepared as follows. First, Co₃O₄ powder (produced by Seido Chemical Industry Co., Ltd.) and Li₂CO₃ powder (produced by Honjo Chemical Corporation) are mixed so as to have an Li/Co molar ratio of 1.01, and then the mixed powder is held at 780°C for five hours. Then, resultant powder is pulverized and cracked into particles with D50 of 0.4 µm in terms of volume in a pot mill so as to obtain powder of plate-like LiCoO₂ particles.

Then, 100 parts by weight of the resultant LiCoO₂ powder, 100 parts by weight of a dispersion medium (toluene:isopropanol = 1:1), 10 parts by weight of a binder (polyvinyl butyral: product number BM-2, produced by Sekisui Chemical Co., Ltd.), 4 parts by weight of a plasticizer (DOP: Di(2-ethylhexyl)phthalate, produced by Kurogane Kasei Co., Ltd.), and 2 parts by weight of a dispersant (product name: RHEODOL SP-O30, produced by Kao Corporation) are mixed. A resultant mixture is stirred and deaerated under a reduced pressure and adjusted to have a viscosity of 4000 cP, so that LiCoO₂ slurry is prepared. The viscosity is measured using an LVT-type viscometer produced by AMETEK Brookfield, Inc. The slurry prepared in this way is molded in sheet form on a polyethylene terephthalate (PET) film by doctor blading so as to form the LiCoO₂ green sheet. The LiCoO₂ green sheet after drying has a thickness of 98 µm.

Next, the LiCoO₂ green sheet delaminated from the PET film is cut out into a piece measuring 50 mm per side by a cutter knife and placed on the center of a setter made of magnesia and serving as a lower setter (dimensions: 90 mm per side and a height of 1 mm). A porous magnesia setter is also placed as an upper setter on the LiCoO₂ sheet. The LiCoO₂ sheet, sandwiched between the setters, is placed in an alumina sheath with 120 mm per side (produced by Nikkato Corporation). At this time, the alumina sheath is not hermetically sealed and is covered with a lid while leaving a clearance of 0.5 mm. A resultant laminate is fired by increasing the temperature of the laminate up to 600°C at 200°C/h and degreasing the laminate for three hours and then by increasing the temperature of the laminate up to 870°C at 200°C/h and holding the laminate for 20 hours. After the firing, the temperature is reduced down to an ambient temperature, and a fired body is taken out of the alumina sheath. In this way, an LiCoO₂ sintered plate with a thickness of 90 µm is obtained. The resultant LiCoO₂ sintered plate is cut out into rectangular pieces with dimensions of 10.5 mm × 9.5 mm by a laser beam machine so as to obtain a plurality of active material plate elements 24 (i.e., the positive active material plate 22).

When the positive active material plate 22 has been prepared, acetylene black is mixed into a solution obtained by dissolving polyamide-imide (PAI) in N-methylpyrrolidone so as to prepare slurry, and 2 microliters (µL) of this slurry is dropped on the positive current collector 21 (aluminum foil with a thickness of 9 mm) so as to form the conductive bonding layer 23. Then, the positive active material plate 22 is placed and dried on the conductive bonding layer 23. In the example illustrated in Fig. 4A, the positive active material plate 22 including the active material plate elements 24 is bonded to the positive current collector 21 via the conductive bonding layer 23. Thereafter, a composite of the positive current collector 21 and the positive active material plate 22 (i.e., the active material plate elements 24) is laminated on the first sheet portion 65 and bonded to the first sheet portion 65 via the positive bonding layer 63 so as to form a positive electrode assembly 20. Note that one end of one of the terminals 7 is fixed in advance to the positive current collector 21 by welding.

On the other hand, the negative current collector 31 (copper foil with a thickness of 10 µm) is coated with the negative active material layer 32 (a carbon layer with a thickness of 130 µm). The negative active material layer 32 is a carbon coating film that includes a mixture of graphite serving as an active material and PVDF serving as a binder. Then, a composite of the negative current collector 31 and the negative active material layer 32 is laminated on the second sheet portion 66 and bonded to the second sheet portion 66 via the negative bonding layer 64 so as to form a negative electrode assembly 30. Note that one end of one of the terminals 7 is fixed in advance to the negative current collector 31 to by welding.

As the separator 4, a porous polyimide membrane (TOKS-8023i2 produced by TOKYO OHKA KOGYO CO., LTD.) is prepared. Then, an intermediate laminate 10 is formed by laminating the positive electrode assembly 20, the separator 4, and the negative electrode assembly 30 in order such that the positive active material plate 22 and the negative active material layer 32 face the separator 4. In the intermediate laminate 10, both of the upper and lower surfaces are covered with the cell case 6 (i.e., the first sheet portion 65 and the second sheet portion 66), and the first sheet portion 65 and the second sheet portion 66 extend around the positive electrode assembly 20, the separator 4, and the negative electrode assembly 30. The positive electrode assembly 20, the separator 4, and the negative electrode assembly 30 (hereinafter, also collectively referred to as a "cell element 15") have a thickness of 0.33 mm in the up-down direction. The cell element 15 has a generally rectangular shape with dimensions of 2.3 cm × 3.2 cm in plan view.

Then, three of the four sides of the generally rectangular intermediate laminate 10 are bonded and sealed by heat seal. In the example illustrated in Fig. 4A, three sides except one side on the upper side in the drawing are sealed. These three sides include one side on which the two terminals 7 protrude. To seal the three sides, a pressing jig that is adjusted to have a sealing width of 2 mm is used, and the outer peripheral portion of the intermediate laminate 10 is heated at 200°C and pressurized with a pressure of 1.5 megapascals (MPa) for 10 seconds. Accordingly, the first sheet portion 65 and the second sheet portion 66 of the cell case 6 are bonded together by heat seal. After the three sides have been sealed, the intermediate laminate 10 is housed in a vacuum dryer 8 in which moisture is removed and the adhesives (i.e., the positive bonding layer 63, the negative bonding layer 64, and the conductive bonding layer 23) are dried.

Next, the intermediate laminate 10 is housed in a glove box 82 as illustrated in Fig. 4B. Then, an impregnator 83 is inserted between the first sheet portion 65 and the second sheet portion 66 on the unsealed side of the intermediate laminate 10, and the electrolytic solution 5 is injected into the intermediate laminate 10 through the impregnator 83. The electrolytic solution 5 is a liquid obtained by dissolving LiBF₄ in a mixed solvent that contains EC and GBL in a volume ratio of 1:3 so as to achieve the LiBF₄ concentration of 1.5 mol/L and by further adding VC as an additive so as to achieve the concentration of 5.3 % by weight of VC.

When the injection of the electrolytic solution 5 has ended, the aforementioned unsealed side is tentatively sealed with a simple sealer in a reduced atmosphere with an absolute pressure of 5 kPa in the glove box 82 (i.e., sealing under reduced pressure). Then, the intermediate laminate 10 is initially charged and subjected to 7 day aging. After the aging is completed, portions of the first sheet portion 65 and the second sheet portion 66 that are in the vicinity of the outer edge of the tentatively sealed side (i.e., the end that does not contain the cell element 15) are removed to remove gases generated by the aging and including moisture or the like (i.e., degassing).

After the degassing is completed, the side formed by the aforementioned removal is bonded and sealed by heat seal in an reduced atmosphere with an absolute pressure of 5 kPa in the glove box 82. As in the case of the aforementioned sealing of the three sides, a pressing jig adjusted to have a sealing width of 2 mm is used in this sealing, and the first sheet portion 65 and the second sheet portion 66 are heated at 200°C and pressurized with a pressure of 1.5 MPa for 10 seconds. Accordingly, the first sheet portion 65 and the second sheet portion 66 of the cell case 6 are bonded together by heat seal, and the lithium secondary cell 1 is formed. Thereafter, redundant outer peripheral portions of the cell case 6 are removed to adjust the shape of the lithium secondary cell 1. In plan view, the lithium secondary cell 1 has a rectangular shape with dimensions of 38 mm × 27 mm and has a thickness less than or equal to 0.45 mm and a capacity of 30 mAh.

In the lithium secondary cell 1 manufactured by the aforementioned manufacturing method, the primary particles in the positive active material plate 22 (i.e., LiCoO₂ sintered plate) have an average orientation angle of 16°. This average orientation angle is measured as follows. First, the above-described LiCoO₂ sintered plate is grinded by a cross-section polisher (CP) (IB-15000CP produced by JEOL Ltd.), and a resultant section (i.e., a section perpendicular to the main surface of the LiCoO₂ sintered plate) is measured by EBSD at a 1000x magnification with a field of view of 125 µm × 125 µm so as to obtain an EBSD image. This EBSD measurement is conducted using a Schottky field emission scanning electron microscope (model: JSM-7800F produced by JEOL Ltd.). Then, for every particle identified in the resultant EBSD image, the angle formed by the (003) plane of the primary particle and the main surface of the LiCoO₂ sintered plate (i.e., the inclination of crystal orientation from the (003) plane) is obtained as an inclination angle, and an average value of these angles is assumed to be the average orientation angle of the primary particles.

As described above, the LiCoO₂ sintered plate has a plate thickness of 90 µm. This plate thickness is measured by grinding the LiCoO₂ sintered plate using a cross-section polisher (CP) (IB-15000CP produced by JEOL Ltd.) and observing a resultant section by SEM (JSM6390LA produced by JEOL Ltd.). Note that the aforementioned thickness of the dried LiCoO₂ green sheet is also measured in the same manner.

The LiCoO₂ sintered plate has a porosity of 30%. This porosity is measured as follows. The LiCoO₂ sintered plate is grinded by a cross-section polisher (CP) (IB-15000CP produced by JEOL Ltd.), and a resultant section is observed at a 1000x magnification with a field of view of 125 µm × 125 µm by SEM (JSM6390LA produced by JEOL Ltd.). A resultant SEM image is subjected to image analysis to calculate the porosity (%) by dividing a total area of all the pores by the area of the LiCoO₂ sintered plate and multiplying the obtained value by 100.

The LiCoO₂ sintered plate has a mean pore diameter of 0.8 µm. This mean pore diameter is measured by mercury porosimetry using a mercury porosimeter (AutoPore IV9510 produced by Shimadzu Corporation).

Next, the relationship of the air permeability of the separator 4, the cell characteristics of the lithium secondary cell 1, and the presence or absence of precipitation of lithium dendrites will be described with reference to Tables 1 and 2.

**Table 1**

| | | Separator | Positive Electrode | Negative Electrode | Temperature | Pressure | Time | Air Permeability | Change in Air Permeability | Rate Capability | Proportion of Rate Capability | Lithium Dendrites |
|---|---|---|---|---|---|---|---|---|---|---|---|---|
| | | | | | (°C) | (MPa) | (Min) | (sec/100cc) | | (%) | | |
| Example | 1a | Polyimide | LCO Sintered Plate | Coating | 25 Electrode | 0.5 | 20 | 62 | No change | 70 | 1.00 | - |
| Example | 1b | | | | | 3.1 | | 70 | No change | 70 | 1.00 | - |
| Example | 1c | | | | | 6 | | 65 | No change | 70 | 1.00 | - |
| Example | 2a | Polyimide | LCO Sintered Plate | Coating Electrode | 110 | 0.5 | 20 | 74 | No change | 66 | 0.94 | - |
| Example | 2b | | | | | 3.1 | | 65 | No change | 66 | 0.94 | - |
| Example | 2c | | | | | 6 | | 71 | No change | 65 | 0.93 | - |
| Example | 3a | Polyimide | LCO Sintered Plate | Coating Electrode | 115 | 0.5 | 20 | 66 | No change | 66 | 0.94 | - |
| Example | 3b | | | | | 3.1 | | 58 | No change | 65 | 0.93 | - |
| Example | 3c | | | | | 6 | | 69 | No change | 66 | 0.94 | - |
| Example | 4a | Polyimide | LCO Sintered Plate | Coating Electrode | 120 | 0.5 | 20 | 72 | No change | 65 | 0.93 | - |
| Example | 4b | | | | | 3.1 | | 77 | No change | 64 | 0.91 | - |
| Example | 4c | | | | | 6 | | 68 | No change | 64 | 0.91 | - |
| Example | 5a | Polyimide | LCO Sintered Plate | Coating Electrode | 125 | 0.5 | 20 | 56 | No change | 64 | 0.91 | - |
| Example | 5b | | | | | 3.1 | | 61 | No change | 63 | 0.90 | - |
| Example | 5c | | | | | 6 | | 67 | No change | 64 | 0.91 | - |
| Example | 6a | Polyimide | LCO Sintered Plate | Coating Electrode | 130 | 0.5 | 20 | 63 | No change | 63 | 0.90 | - |
| Example | 6b | | | | | 3.1 | | 69 | No change | 62 | 0.89 | - |
| Example | 6c | | | | | 6 | | 78 | No change | 62 | 0.89 | - |
| Example | 7a | Polyimide | LCO Sintered Plate | Coating Electrode | 135 | 0.5 | 20 | 79 | No change | 62 | 0.89 | - |
| Example | 7b | | | | | 3.1 | | 64 | No change | 61 | 0.87 | - |
| Example | 7c | | | | | 6 | | 57 | No change | 61 | 0.87 | - |

**Table 2**

| | | Separator | Positive Electrode | Negative Electrode | Temperature | Pressure | Time | Air Permeability | Change in Air Permeability | Rate Capability | Proportion of Rate Capability | Lithium Dendrites |
|---|---|---|---|---|---|---|---|---|---|---|---|---|
| | | | | | (°C) | (Mpa) | (Min) | (sec/100cc) | | (%) | | |
| Example | 8a | Polyimide | LCO Sintered Plate | LCO Sintered | 25 | Plate 0.5 | 20 | 62 | No change | 98 | 1.00 | - |
| Example | 8b | | | | | 3.1 | | 68 | No change | 98 | 1.00 | - |
| Example | 8c | | | | | 6 | | 76 | No change | 98 | 1.00 | - |
| Example | 9a | Polyimide | LCO Sintered Plate | LCO Sintered Plate | 120 | 0.5 | 20 | 60 | No change | 98 | 1.00 | - |
| Example | 9b | | | | | 3.1 | | 59 | No change , | 98 | 1.00 | - |
| Example | 9c | | | | | 6 | | 60 | No change | 98 | 1.00 | - |
| Example | 10a | Cellulose + PET | LCO Sintered Plate | Coating Electrode | 25 | 0.5 | 20 | 38 | No change | 59 | 0.60 | - |
| Example | 10b | | | | | 3.1 | | 36 | No change | 60 | 0.61 | - |
| Example | 10c | | | | | 6 | | 40 | No change | 57 | 0.58 | - |
| Example | 11a | Cellulose + PET | LCO Sintered Plate | Coating Electrode | 120 | 0.5 | 20 | 66 | No change | 54 | 0.55 | - |
| Example | 11b | | | | | 3.1 | | 75 | No change | 53 | 0.54 | - |
| Example | 11c | | | | | 6 | | 78 | No change | 50 | 0.51 | - |
| Example | 12a | PET + Ceramic | LCO Sintered Plate | Coating Electrode | 25 | 0.5 | 20 | 25 | No change | 65 | 0.93 | - |
| Example | 12b | | | | | 3.1 | | 23 | No change | 66 | 0.94 | - |
| Example | 12c | | | | | 6 | | 27 | No change | 63 | 0.90 | - |
| Comparative Exam ple | 1a | PET + Ceramic | LCO Sintered Plate | Coating Electrode | 110 | 0.5 | 20 | 109 | Increased | 42 | 0.60 | - |
| Comparative Example | 1b | | | | | 3.1 | | 126 | Increased | 40 | 0.57 | - |
| Comparative Example | 1c | | | | | 6 | | 211 | Increased | 35 | 0.50 | - |
| Comparative Example | 2a | PET + Ceramic | LCO Sintered Plate | Coating Electrode | 120 | 0.5 | 20 | 115 | Increased | 42 | 0.60 | - |
| Comparative Example | 2b | | | | | 3.1 | | 133 | Increased | 40 | 0.57 | - |
| Comparative Example | 2c | | | | | 6 | | 237 | Increased | 34 | 0.49 | - |
| Comparative Example | 3a | PET + Ceramic | LCO Sintered Plate | Coating Electrode | 130 | 0.5 | 20 | 119 | Increased | 41 | 0.59 | - |
| Comparative Example | 3b | | | | | 3.1 | | 182 | Increased | 35 | 0.50 | - |
| Comparative Example | 3c | | | | | 6 | | 265 | Increased | 33 | 0.47 | - |
| Comparative Example | 4 | Polypropylene | LCO Sintered Plate | Coating Electrode | 120 | 3.1 | 20 | >800 (immeasurable) | Increased | 5< | 0.1< | - |
| Comparative Example | 5 | Cellulose | LCO Sintered Plate | Coating Electrode | 120 | 3.1 | 20 | 9 | No change | 5< | 0.1 < | Dendrites |

The air permeability shown in the tables indicates the air permeability of the separator 4 taken out of the lithium secondary cell 1 that has undergone processing corresponding to either the cold lamination or the hot lamination described above. The air permeability of the separator 4 was measured using a perm porometer produced by Porous Materials Inc. (model: CFP-1200-AEXLSPHBB) and a technique for evaluating through pores by the bubble point method. Measured samples had generally disk shapes with a diameter of 25 mm. The measurement used air with a viscosity of 0.000019 pascal-seconds (Pa-s) (i.e., 0.019 centipoise (cP)) as a reagent.

The temperature and the pressure shown in the tables indicate the processing temperature and the processing pressure applied to the lithium secondary cell 1 before the separator 4 is taken out thereof for measurement of the air permeability, and the time shown in the tables indicates the processing time with the processing temperature and the processing pressure. A temperature of 25°C corresponds to the aforementioned cold lamination, and temperatures of 110°C to 135°C correspond to the aforementioned hot lamination. The change in air permeability shown in the tables indicates a change in the air permeability of the separator 4 caused by the application of the processing temperature and the processing pressure. The rate capability shown in the tables indicates a value (%) obtained by dividing a current actually output from the lithium secondary cell 1 when the C-rate is 1C by a current that should originally have been output (i.e., a theoretical output value). The proportion of rate capability shown in the tables is a value obtained by dividing each rate capability by reference rate capability. In Examples 1a, 1b, and 1c, the rate capability of the lithium secondary cell 1 of Example 1a was used as the reference rate capability. In the following description, Examples 1a, 1b, and 1c are also collectively referred to as "Example 1." The same applies to the other examples and comparative examples. In Examples 2 to 7, Examples 10 to 12, and Comparative Examples 1 to 5, the rate capability of the lithium secondary cell 1 of Example 1 was used as the reference rate capability as in Example 1. In Examples 8 and 9, the rate capability of the lithium secondary cell 1 of Example 8a was used as the reference rate capability.

In the lithium secondary cells 1 of Examples 1a, 1b, and 1c, the separator 4 was a single-layer separator made of polyimide. The positive electrode 2 included an LiCoO₂ sintered plate serving as the positive active material plate 22, and the negative electrode 3 was a coating electrode including the negative active material layer 32 containing graphite.

In Examples 1a, 1b, and 1c, pressures of 0.5 MPa, 3.1 MPa, and 6 MPa were respectively applied to the lithium secondary cells 1 at a temperature of 25°C for 20 minutes before the separators 4 were taken out of the lithium secondary cells 1. In Examples 1a, 1b, and 1c, the separators 4 taken out of the lithium secondary cells 1 after the application of pressure respectively had air permeability of 62 sec/100cc, air permeability of 70 sec/100cc, and air permeability of 65 sec/100cc, and there was substantially no change in air permeability caused by the application of pressure. The lithium secondary cells 1 each had rate capability of 70%, and there was no precipitation of lithium dendrites.

Examples 2a, 2b, and 2c differed from Examples 1a, 1b, and 1c only in the temperature during the application of pressure, which was 110°C. In Examples 2a, 2b, and 2c, the separators 4 taken out of the lithium secondary cells 1 after the application of pressure respectively had air permeability of 74 sec/100cc, air permeability of 65 sec/100cc, and air permeability of 71 sec/100cc, and there was substantially no change in air permeability caused by the application of pressure. The lithium secondary cells 1 respectively had rate capabilities of 66%, 66%, and 65%, and there was no precipitation of lithium dendrites.

Examples 3a, 3b, and 3c differed from Examples 1a, 1b, and 1c only in the temperature during the application of pressure, which was 115°C. In Examples 3a, 3b, and 3c, the separators 4 taken out of the lithium secondary cells 1 after the application of pressure respectively had air permeability of 66 sec/100cc, air permeability of 58 sec/1 00cc, and air permeability of 69 sec/100cc, and there was substantially no change in air permeability caused by the application of pressure. The lithium secondary cells 1 respectively had rate capabilities of 66%, 65%, and 66%, and there was no precipitation of lithium dendrites.

Examples 4a, 4b, and 4c differed from Examples 1a, 1b, and 1c only in the temperature during the application of pressure, which was 120°C. In Examples 4a, 4b, and 4c, the separators 4 taken out of the lithium secondary cells 1 after the application or pressure respectively had air permeability of 72 sec/100cc, air permeability of 77 sec/100cc, and air permeability of 68 sec/100cc, and there was substantially no change in air permeability caused by the application of pressure. The rate capabilities were respectively 65%, 64%, and 64%, and there was no precipitation of lithium dendrites.

Examples 5a, 5b, and 5c differed from Examples 1a, 1b, and 1c only in the temperature during the application of pressure, which was 125°C. In Examples 5a, 5b, and 5c, the separators 4 taken out of the lithium secondary cells 1 after the application of pressure respectively had air permeability of 56 sec/100cc, air permeability of 61 sec/100cc, and air permeability of 67 sec/100cc, and there was substantially no change in air permeability caused by the application of pressure. The lithium secondary cells 1 respectively had rate capabilities of 64%, 63%, and 61%, and there was no precipitation of lithium dendrites.

Examples 6a, 6b, and 6c differed from Examples 1a, 1b, and 1c only in the temperature during the application of pressure, which was 130°C. In Examples 6a, 6b, and 6c, the separators 4 taken out of the lithium secondary cells 1 after the application of pressure respectively had air permeability of 63 sec/100cc, air permeability of 69 sec/100cc, and air permeability of 78 sec/100cc, and there was substantially no change in air permeability caused by the application of pressure. The lithium secondary cells 1 respectively had rate capabilities of 63%, 62%, and 62%, and there was no precipitation of lithium dendrites.

Examples 7a, 7b, and 7c differed from Examples 1a, 1b, and 1c only in the temperature during the application of pressure, which was 135°C. In Examples 7a, 7b, and 7c, the separators 4 taken out of the lithium secondary cells 1 after the application of pressure respectively had air permeability of 79 sec/100cc, air permeability of 64 sec/100cc, and air permeability of 57 sec/100cc, and there was substantially no change in air permeability caused by the application of pressure. The lithium secondary cells 1 respectively had rate capabilities of 62%, 61 %, and 61%, and there was no precipitation of lithium dendrites.

Examples 8a, 8b, and 8c differed from Examples 1a, 1b, and 1c only in the type of the negative electrode, and the negative electrode 3a including the LTO sintered plate was provided as the negative active material plate 32a. Note that the temperature during the application of pressure was 25°C. In Examples 8a, 8b, and 8c, the separators 4 taken out of the lithium secondary cells 1 after the application of pressure respectively had air permeability of 62 sec/100cc, 68 sec/100cc, and 76 sec/100cc, and there was substantially no change in air permeability caused by the application of pressure. The lithium secondary cells 1 each had rate capability of 98%, and there was no precipitation of lithium dendrites.

Examples 9a, 9b, and 9c differed from Examples 8a, 8b, and 8c only in the temperature during the application of pressure, which was 120°C. In Examples 9a, 9b, and 9c, the separators 4 taken out of the lithium secondary cells 1 after the application of pressure respectively had air permeability of 60 sec/100cc, air permeability of 59 sec/100cc, and air permeability of 60 sec/100cc, and there was substantially no change in air permeability caused by the application of pressure. The lithium secondary cells 1 each had rate capability of 98%, and there was no precipitation of lithium dendrites.

Examples 10a, 10b, and 10c differed from Examples 1a, 1b, and 1c only in the type of the separator 4. In Examples 10a, 10b, and 10c, the separators 4 were hybrid separators containing cellulose and polyethylene terephthalate (PET), and the temperature during the application of pressure was 25°C. In Examples 10a, 10b, and 10c, the separators 4 taken out of the lithium secondary cells 1 after the application of pressure respectively had air permeability of 38 sec/100cc, air permeability of 36 sec/100cc, and air permeability of 40 sec/100cc, and there was substantially no change in air permeability caused by the application of pressure. The lithium secondary cells 1 respectively had rate capabilities of 59%, 60%, and 57%, and there was no precipitation of lithium dendrites.

Examples 11a, 11b, and 11c differed from Examples 10a, 10b, and 10c only in the temperature during the application of pressure, which was 120°C. In Examples 11a, 11b, and 11c, the separators 4 taken out of the lithium secondary cells 1 after the application of pressure respectively had air permeability of 66 sec/100cc, air permeability of 75 sec/100cc, and air permeability of 78 sec/100cc, and there was substantially no change in air permeability caused by the application of pressure. The lithium secondary cells 1 respectively had rate capabilities of 54%, 53%, and 50%, and there was no precipitation of lithium dendrites.

Examples 12a, 12b, and 12c differed from Examples 1a, 1b, and 1c only in the type of the separator 4, and the separators 4 were multilayer separators containing a polyethylene terephthalate (PET) layer and a ceramic layer. Note that the temperature during the application of pressure was 25°C. In Examples 12a, 12b, and 12c, the separators 4 taken out of the lithium secondary cells 1 after the application of pressure respectively had air permeability of 25 sec/100cc, air permeability of 23 sec/100cc, and air permeability of 27 sec/100cc, and there was substantially no change in air permeability caused by the application of pressure. The lithium secondary cells 1 respectively had rate capabilities of 65%, 66%, and 63%, and there was no precipitation of lithium dendrites.

Comparative Examples 1a, 1b, and 1c differed from Examples 12a, 12b, and 12c only in the temperature during the application of pressure, which was 110°C. In Comparative Examples 1a, 1b, and 1c, the separators 4 taken out of the lithium secondary cells 1 after the application of pressure respectively had air permeability of 109 sec/100cc, air permeability of 126 sec/100cc, and air permeability of 211 sec/100cc, which were each higher than the air permeability of the separator 4 before the application of pressure. The lithium secondary cells 1 respectively had low rate capabilities of 42%, 40%, and 35%, and there was no precipitation of lithium dendrites.

Comparative Examples 2a, 2b, and 2c differed from Examples 12a, 12b, and 12c only in the temperature during the application of pressure, which was 120°C. In Comparative Examples 2a, 2b, and 2c, the separators 4 taken out of the lithium secondary cells 1 after the application of pressure respectively had air permeability of 115 sec/100cc, air permeability of 133 sec/100cc, and air permeability of 237 sec/100cc, which were each higher than the air permeability of the separator 4 before the application of pressure. The lithium secondary cells 1 respectively had low rate capabilities of 42%, 40%, and 34%, and there was no precipitation of lithium dendrites.

Comparative Examples 3a, 3b, and 3c differed from Examples 12a, 12b, and 12c only in the temperature during the application of pressure, which was 130°C. In Comparative Examples 3a, 3b, and 3c, the separators 4 taken out of the lithium secondary cells 1 after the application of pressure respectively had air permeability of 119 sec/100cc, air permeability of 182 sec/100cc, and air permeability of 265 sec/100cc, which were each higher than the air permeability of the separator 4 before the application of pressure. The lithium secondary cells 1 respectively had low rate capabilities of 41%, 35%, and 33%, and there was no precipitation of lithium dendrites.

Comparative Example 4 differed from Comparative Example 2b only in the type of the separator 4 and used a single-layer separator made of polypropylene. Note that the temperature during the application of pressure was 120°C, and the pressure was 3.1 MPa. In Comparative Example 4, the separator 4 taken out of the lithium secondary cell 1 after the application of pressure had air permeability higher than 800 sec/100cc, which was considerably higher than the air permeability of the separator 4 before the application of pressure and could not be measured accurately. Since the polypropylene separator 4 rejected the electrolytic solution, the rate capability of the lithium secondary cell 1 became considerably lower than 5% and could hardly be measured. There was no precipitation of lithium dendrites.

Comparative Example 5 differed from Comparative Example 2b only in the type of the separator 4 and used a single-layer separator made of cellulose. Note that the temperature during the application of pressure was 120°C, and the pressure was 3.1 MPa. In Comparative Example 5, the separator 4 taken out of the lithium secondary cell 1 after the application of pressure had air permeability of 9 sec/100cc, but developed a short circuit between the positive electrode 2 and the negative electrode 3 caused by lithium dendrites. Thus, the rate capability of the lithium secondary cell 1 became considerably lower than 5% and could hardly be measured.

From Examples 1 and 8, it can be seen that when the lithium secondary cell 1 is mounted on a smart card by cold lamination, the air permeability of the single-layer separator 4 made of polyimide substantially does not increase in the mounting step. From Examples 2 to 7 and 9, it can be seen that when the lithium secondary cell 1 is mounted on the smart card by hot lamination, the air permeability of the single-layer separator 4 made of polyimide substantially does not increase in the mounting step, which suppresses a reduction in rate capability from the rate capabilities of Examples 1 and 8 (cold lamination). The comparison between Examples 1 and 8 and the comparison between Examples 4 and 9 show that using the negative electrode 3a including the LTO sintered plate as the negative active material plate 32a achieves higher rate capability than in the case of using the negative electrode 3, which is a coating electrode.

From Example 10, it can be seen that when the lithium secondary cell 1 is mounted on a smart card by cold lamination, the air permeability of the hybrid separator 4 containing cellulose and PET substantially does not increase in the mounting step.

From Example 11, it can be seen that when the lithium secondary cell 1 is mounted on a smart card by hot lamination, the air permeability of the hybrid separator 4 containing cellulose and PET substantially does not increase in the mounting step.

From Example 12, it can be seen that when the lithium secondary cell 1 is mounted on a smart card by cold lamination, the air permeability of the separator 4 including the PET layer substantially does not increase in the mounting step, which helps suppressing a reduction in rate capability from the rate capability of Example 1 (the single-layer separator 4 made of polyimide).

From Comparative Examples 1 to 3, it can be seen that when the lithium secondary cell 1 is mounted on a smart card by hot lamination, the air permeability of the multilayer separator 4 including the PET layer and the ceramic layer increases in the mounting step, which increases a reduction in rate capability from the rate capability of Example 1 (the single-layer separator 4 made of polyimide).

From Comparative Example 4, it can be seen that when the lithium secondary cell 1 is mounted on a smart card by hot lamination, the air permeability of the polypropylene separator 4 increases in the mounting step, which considerably increases a reduction in rate capability from the rate capability of Example 1 (the single-layer separator 4 made of polyimide).

From Comparative Example 5, it can be seen that when the lithium secondary cell 1 is mounted on a smart card by hot lamination, the cellulose separator 4 develops a short circuit between the positive electrode 2 and the negative electrode 3 caused by lithium dendrites, which considerably increases a reduction in rate capability from the rate capability of Example 1 (the single-layer separator 4 made of polyimide).

As described thus far, the thin lithium secondary cell 1 includes the positive electrode 2, the separator 4, the negative electrode 3 (or the negative electrode 3a), the electrolytic solution 5, and the cell case 6. The separator 4 is arranged on the positive electrode 2 in a predetermined direction of superposition. The separator 4 includes a resin layer. The negative electrode 3 is arranged on the separator 4 on the side opposite to the positive electrode 2 in the direction of superposition. The positive electrode 2, the negative electrode 3, and the separator 4 are impregnated with the electrolytic solution 5. The cell case 6 has a sheet-like shape and covers the positive electrode 2 and the negative electrode 3 from both sides in the aforementioned direction of superposition. The cell case 6 houses therein the positive electrode 2, the separator 4, the negative electrode 3, and the electrolytic solution 5. The separator 4 has air permeability higher than or equal to 20 sec/100cc and lower than or equal to 80 sec/100cc.

In this way, in the lithium secondary cell 1, the separator 4 with air permeability lower than or equal to 80 sec/100cc facilitates the passage of the electrolytic solution 5 and lithium ions through the separator 4 and reduces the internal resistance of the lithium secondary cell 1. As a result, it is possible to improve the cell characteristics of the lithium secondary cell 1. The separator 4 with air permeability higher than or equal to 20 sec/100cc also suppresses the precipitation of lithium dendrites and suppresses the occurrence of a short circuit between the positive electrode 2 and the negative electrode 3 caused by lithium dendrites.

In the lithium secondary cell 1, the aforementioned resin layer of the separator 4 is preferably formed of polyimide. As described above, for example, the resin layer may be formed of polyimide, formed of a combination of cellulose and PET, or formed in multiple layers including a polyester (e.g., PET) layer and a ceramic layer. However, the multilayer structure including the PET layer and the ceramic layer has limited heat-resisting properties, and therefore the air permeability of the separator 4 may be increased by the application of heat and pressure when the lithium secondary cell 1 is mounted on a target device (e.g., mounted on a smart card by hot lamination). Since the extent of the increase in air permeability cannot be expected easily, it is not easy in the lithium secondary cell 1 mounted on the target device to set the air permeability of the separator 4 within the above-described range (i.e., higher than or equal to 20 sec/100cc and lower than or equal to 80 sec/100cc). In contrast, when the resin layer of the separator 4 is formed of polyimide having relatively high heat-resisting properties or formed of a combination of cellulose and PET, it is possible to prevent or suppress an increase in the air permeability of the separator 4 caused by hot lamination or other factors. Accordingly, the air permeability of the separator 4 in the lithium secondary cell 1 incorporated into the target device can be easily set within the above-described range (i.e., higher than or equal to 20 sec/100cc and lower than or equal to 80 sec/100cc).

As described above, out of the positive electrode 2 and the negative electrode 3, one electrode that faces the resin layer of the separator 4 has a surface facing the resin layer and not containing resins. This reduces a situation where this one electrode and the resin layer of the separator 4 come in tight contact with each other due to the processing (e.g., hot lamination) performed when the lithium secondary cell 1 is mounted on a target device. As a result, it is possible to suppress inhibition in the flow of the electrolytic solution 5 between the one electrode and the resin layer and to improve the cell characteristics of the lithium secondary cell 1.

In the lithium secondary cell 1, the surface of the separator 4 that faces the other electrode (i.e., electrode different from the above-described one electrode) of the positive electrode 2 and the negative electrode 3 is also formed of resin, and the surface of the other electrode that faces the separator 4 preferably does not contain resins. This reduces a situation where the other electrode and the separator 4 come in tight contact with each other due to the processing (e.g., hot lamination) performed when the lithium secondary cell 1 is mounted on a target device. As a result, it is possible to further improve the cell characteristics of the lithium secondary cell 1.

In the lithium secondary cell 1, the above-described one electrode is preferably the positive electrode 2. The positive electrode 2 preferably includes a sheet-like current collector having conductivity (i.e., the positive current collector 21) and an active material plate that is a plate-like ceramic sintered body containing a lithium composite oxide (i.e., the positive active material plate 22). This further reduces a situation where the positive electrode 2 and the separator 4 come in tight contact with each other due to the processing (e.g., hot lamination) performed when the lithium secondary cell 1 is mounted on a target device. As a result, it is possible to further improve the cell characteristics of the lithium secondary cell 1.

More preferably, the positive active material plate 22 of the positive electrode 2 has a structure in which primary particles having a layered rock-salt structure are coupled together. The primary particles preferably have an average inclination angle greater than 0° and less than or equal to 30°. The average inclination angle is an average value of the angles formed by the (003) planes of the primary particles and the main surface of the positive active material plate 22. This reduces a situation where the internal stress of the positive active material plate 22 produced by expansion and contraction of crystal lattices accompanying the cycle of charging and discharging is applied to the main surface of the positive active material plate 22 that faces the conductive bonding layer 23 and the positive current collector 21.

In this way, the interval stress produced by expansion and contraction of crystal lattices is made less likely to be applied to the main surface of the positive active material plate 22 that comes in contact with the conductive bonding layer 23. This suppresses a reduction in the strength of bonding between the positive active material plate 22 and the positive current collector 21. As a result, it is possible to improve the stability of the voltage during charring and discharging of the lithium secondary cell 1.

In the lithium secondary cell 1, the above-described other electrode is preferably the negative electrode 3a, and the negative electrode 3a preferably includes a sheet-like current collector having conductivity (i.e., the negative current collector 31a) and an active material plate that is a plate-like ceramic sintered body containing a lithium composite oxide (i.e., the negative active material plate 32a). This reduces a situation where the negative electrode 3a and the separator 4 come in tight contact with each other due to the processing (e.g., hot lamination) performed when the lithium secondary cell 1 is mounted on a target device. As a result, it is possible to further improve the cell characteristics of the lithium secondary cell 1.

The lithium secondary cell 1 described above is thin, but can achieve both an improvement in cell characteristics and a reduction in the occurrence of a short circuit caused by lithium dendrite. Accordingly, the lithium secondary cell 1 is in particular suitable for use as a power supply source for a thin device, i.e., a sheet-like device or a device having flexibility (e.g., a smart card).

As described above, the separator 4 is made to have air permeability higher than or equal to 20 sec/100cc and lower than or equal to 80 sec/100cc when the lithium secondary cell 1 is mounted on a target device such as a smart card. This allows the lithium secondary cell 1 to achieve both an improvement in cell characteristics and a reduction in the occurrence of a short circuit caused by lithium dendrites. Accordingly, the lithium secondary cell 1 is in particular suitable for use in the case where the process of mounting the lithium secondary cell on a target device involves a step that may exert an influence on the air permeability of the separator 4, i.e., for use as a power supply source for a target device that undergoes the process of applying pressure while applying heat during manufacture.

The lithium secondary cell 1 described above may be modified in various ways.

For example, the structure of the positive active material plate 22 of the positive electrode 2 may be modified in various ways. In the positive active material plate 22, for example, the average inclination angle of the primary particles with a layered rock-salt structure may be greater than 30° and may be 0°. Alternatively, the primary particles may have a structure other than the layered rock-salt structure.

The positive electrode 2 may be a coating electrode in which the positive current collector 21 is coated with a positive active material that contains a binder composed primary of resin and a positive active material layer.

The lithium secondary cell 1 may be used as a power supply source for a device having flexibility (e.g., card-type device) other than a smart card or for a sheet-like device (e.g., a wearable device provided on clothes or the like or a body-mounted device). The lithium secondary cell 1 may also be used as a power supply source for various targets (e.g., an IoT module) other than the devices described above.

The configurations of the above-described preferred embodiments and variations may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

### Industrial Applicability

The lithium secondary cell according to the present invention is applicable in various fields using lithium secondary cells, such as being used as, for example, a power supply source for a smart card having an arithmetic processing function.

### Reference Signs List

- 1: Lithium secondary cell
- 2: Positive electrode
- 3, 3a: Negative electrode
- 4: Separator
- 5: Electrolytic solution
- 6: Cell case
- 21: Positive current collector
- 22: Positive active material plate
- 31, 31a: Negative current collector
- 32: Negative active material layer
- 32a: Negative active material plate

## Claims

1. A thin lithium secondary cell comprising:
a positive electrode;
a separator including a resin layer and arranged on said positive electrode in a predetermined direction of superposition;
a negative electrode arranged on said separator on a side opposite to said positive electrode in said direction of superposition;
an electrolytic solution with which said positive electrode, said negative electrode, and said separator are impregnated; and
a sheet-like cell case covering said positive electrode and said negative electrode from both sides in said direction of superposition and housing therein said positive electrode, said separator, said negative electrode, and said electrolytic solution,
wherein said separator has air permeability higher than or equal to 20 sec/100cc and lower than or equal to 80 sec/100cc.

2. The lithium secondary cell according to claim 1, wherein
said resin layer is formed of polyimide.

3. The lithium secondary cell according to claim 1 or 2, wherein
out of said positive electrode and said negative electrode, one electrode that faces said resin layer has a surface facing said resin layer and not containing resin.

4. The lithium secondary cell according to claim 3, wherein
said one electrode is said positive electrode, and
said positive electrode includes:
a sheet-like current collector having conductivity; and
an active material plate that is a plate-like ceramic sintered body containing a lithium composite oxide.

5. The lithium secondary cell according to claim 3, wherein
said separator has a surface formed of resin and facing the other electrode out of said positive electrode and said negative electrode, and
said other electrode has a surface facing said separator and not containing resin.

6. The lithium secondary cell according to claim 5, wherein
said one electrode is said positive electrode,
said other electrode is said negative electrode,
said positive electrode includes:
a sheet-like current collector having conductivity; and
an active material plate that is a plate-like ceramic sintered body containing a lithium composite oxide, and
said negative electrode includes:
a sheet-like current collector having conductivity; and
an active material plate that is a plate-like ceramic sintered body containing a lithium composite oxide.

7. The lithium secondary cell according to claim 4 or 6, wherein
said active material plate of said positive electrode has a structure in which primary particles having a layered rock-salt structure are coupled together,
said primary particles have an average inclination angle greater than 0° and less than or equal to 30°, and
said average inclination angle is an average value of angles formed by (003) planes of said primary particles and a main surface of said active material plate of said positive electrode.

8. The lithium secondary cell according to any one of claims 1 to 7, being used as a power supply source for a sheet-like device or a device having flexibility.

9. The lithium secondary cell according to claim 8, being used as power supply source for a smart card that is said device having flexibility.

10. The lithium secondary cell according to any one of claims 1 to 9, being used as a power supply source for a target device that undergoes a process of applying pressure while applying heat during manufacture.
